Europäisches Patentamt

European Patent Office

Office européen des brevets

(11) Veröffentlichungsnummer: **0 309 704 B1**

# (12) EUROPÄISCHE PATENTSCHRIFT

(45) Veröffentlichungstag der Patentschrift: **25.11.92**

(21) Anmeldenummer: **88113097.5**

(22) Anmeldetag: **12.08.88**

(51) Int. Cl.⁵: **G11B 7/08**

(54) **Gerät zur Wiedergabe von Daten.**

(30) Priorität: **30.09.87 DE 3732916**

(43) Veröffentlichungstag der Anmeldung:
**05.04.89 Patentblatt 89/14**

(45) Bekanntmachung des Hinweises auf die
Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**US-A- 4 495 608**

**PATENT ABSTRACTS OF JAPAN, Band 9, Nr.
161 (P-370)[1884], Seite 6, 5. Juli 1985;& JP-
A-60 35 381 (SANYO DENKI K.K.) 23-02-1985**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Baas, Dieter
Sofienstrasse 10
W-7640 Kehl(DE)**

Rank Xerox (UK) Business Services

## Beschreibung

Die Erfindung betrifft ein Gerät zur Wiedergabe von Daten, die mittels einer optischen Abtastvorrichtung aus den Datenspuren eines Aufzeichnungsträgers lesbar sind, indem ein Lichtstrahl mittels eines Spurregelkreises auf den Datenspuren führbar ist, wobei beim Spurspringen die optische Abtastvorrichtung durch einen Sprungimpuls zur gewünschten Spur bewegt und dort durch einen Bremsimpuls angehalten wird.

Derartige Geräte, z.B. CD-Spieler, magneto-optische Geräte zur Wiedergabe und Aufzeichnung, Aufzeichnungs- und Wiedergabegeräte für DRAW-Discs oder Videoplattenspieler sind mit einer optischen Abtastvorrichtung, bestehend aus einer Laserdiode, mehreren Linsen, einem Prismenstrahlteiler und einem Photodetektor, ausgestattet. Aufbau und Funktion einer optischen Abtastvorrichtung, eines sogenannten optical-pick-ups, sind in electronic components & applications, Vol. 6, No. 4, 1984 auf Seite 209 - 215 beschrieben.

Der von der Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird der Istwert für den Fokusregelkreis als focusing error bezeichnet, während für den Istwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl in radialer Richtung z.B. um einen vorgebbaren kleinen Winkel kippbar, so daß der Lichtstrahl allein durch diese Kippbewegung ein kleines Stück entlang eines Radius der CD-Platte fahren kann.

Um eine einwandfreie Wiedergabe der Daten, seien es nun z.B. Bild und Ton bei einem Videoplattenspieler oder bloß der Ton bei einem CD-Spieler, zu erzielen, ist neben einer genauen Fokussierung des Lichtstrahls auf die Video- bzw. CD-Platte eine präzise Führung entlang der Datenspuren der Platte erforderlich.

In der EP 00 35 288 ist ein Wiedergabegerät der eingangs genannten Art beschrieben, bei dem das Springen der optischen Abtastvorrichtung durch einen Sprungimpuls, der in der EP 00 35 288 als jump-puls bezeichnet ist, von Spur zu Spur bewirkt wird und bei der die optische Abtastvorrichtung am Ende des Sprungs durch einen Bremsimpuls konstanter Dauer, der als compensatepuls bezeichnet ist, über der gesuchten Spur angehalten wird. Weil aber der Bremsimpuls immer gleich ist, ist er nicht an alle Fälle optimal angepaßt. Es kann deshalb vorkommen, daß die optische Abtastvorrichtung bereits vor oder erst nach der gewünschten Spur angehalten wird. In beiden Fällen erhöht sich die Zugriffszeit auf die gewünschten Daten, weil nachträgliche Korrekturen nötig sind.

Aus der US-PS 4 495 608 ist eine Vorrichtung zum Spurspringen bekannt, bei welcher der Sprung über eine oder mehrere Spuren ebenfalls durch einen Sprungimpuls eingeleitet wird und durch einen Bremsimpuls beendet wird. Um genauer und schneller die gewünschte Spur zu erreichen, ist die Dauer des Bremsimpulses von der Geschwindigkeit abhängig, mit der die Abtastvorrichtung über die Spuren springt. Bei hoher Geschwindigkeit wird der Bremsimpuls lang, bei geringer Geschwindigkeit fällt der Bremsimpuls dagegen kurz aus. Trotzdem kann es bei dieser Vorrichtung vorkommen, daß die gewünschte Spur nicht sofort gefunden wird, so daß nachträgliche Korrekturen nötig sind. Auch bei der Stabilität dieses Spurregelkreises können kritische Zustände auftreten.

Es ist daher Aufgabe der Erfindung, beim Spurspringen in einem Gerät gemäß Oberbegriff des Anspruchs 1 den Bremsimpuls zum Anhalten der optischen Abtastvorrichtung zu optimieren und somit nachträgliche Korrekturen zu vermeiden.

Die erfindungsgemäße Lösung dieser Aufgabe sieht folgende Verfahrensschritte vor:

a) Es wird ein Sprungimpuls abgegeben.

b) Frühestens zu Beginn des Sprungimpulses, spätestens jedoch beim Verlassen der Datenspur wird der Spurregelkreis geöffnet.

c) Die optische Abtastvorrichtung wird durch einen ersten Bremsimpuls konstanter Dauer und Amplitude gebremst, der jedoch so klein dimensioniert ist, daß die Abtastvorrichtung nicht angehalten wird.

d) Es wird die Zeit bis zum Erreichen einer vorgebbaren Spurlage bezüglich der nächsten Datenspur gemessen.

e) Es wird ein zweiter Bremsimpuls abgegeben, dessen Dauer und/oder Amplitude von der gemessenen Zeit abhängt, um die Abtastvorrichtung in der Mitte der nächsten Datenspur anzuhalten.

f) Der Spurregelkreis wird frühestens zu Beginn des zweiten Bremsimpulses, spätestens jedoch in der Mitte der nächsten Datenspur geschlossen.

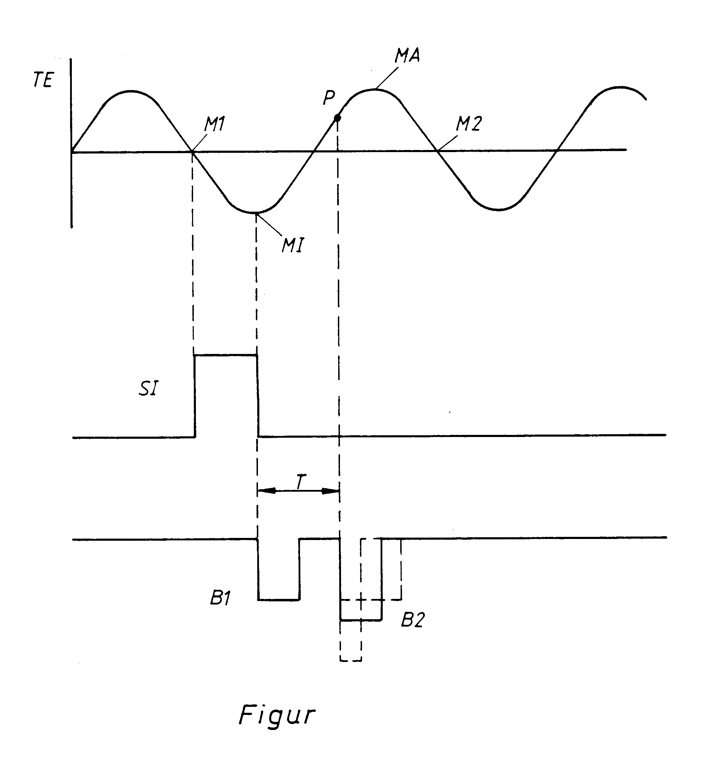

Es wird nun anhand der Figur das erfindungsgemäße Verfahren beschrieben und erläutert.

In der Figur sind das Spurfehlersignal TE, der Sprungimpuls SI und die Bremsimpulse B1 und B2 gezeigt.

Das Spurfehlersignal TE hat einen sinusförmigen Verlauf. Bei einem Nulldurchgang liegt der Lichtstrahl genau in der Mitte der Spur, beim nächsten Nulldurchgang zwischen zwei Spuren, beim nächsten wiederum in der Mitte der folgenden Spur. Ob bei einem Nulldurchgang die Abtastvorrichtung auf der Mitte einer Spur oder zwischen zwei Spuren steht, läßt sich am HF-Signal erkennen. Ist HF-Spannung vorhanden, steht die Abtastvorrichtung auf einer Spur; steht sie dagegen zwischen zwei Spuren, so sind keine HF-Anteile, sondern nur Rauschanteile vorhanden. Dies läßt sich leicht mittels eines HF-Detektors feststellen.

Zum Springen von einer Spur zur nächsten wird ein Sprungimpuls SI abgegeben, der beispielsweise endet, wenn der Lichtstrahl beim Minimum MI des sinusförmigen Spurfehlersignals TE ein Viertel der Spurbreite nach rechts von der Spurmitte M1 abgewichen ist. Anschließend wird der Spurregelkreis geöffnet und ein erster Bremsimpuls B1 konstanter Dauer und Amplitude abgegeben. Frühestens zu Beginn des Sprungimpulses SI darf der Spurregelkreis geöffnet, spätestens jedoch beim Verlassen der Datenspur muß er geöffnet werden. Amplitude und Dauer des ersten Bremsimpulses B1 sind so klein bemessen, daß er die optische Abtastvorrichtung nur zu bremsen, jedoch nicht anzuhalten vermag. Der erste Bremsimpuls B1 kann z.B. enden, bevor das sinusförmige Spurfehlersignal TE wieder positiv wird, also noch bevor der Lichtstrahl die nächste Datenspur erreicht. Es können auch beide Bremsimpulse ineinander übergehen.

Wenn der Lichtstrahl nun an den Rand der nächsten Spur kommt, steigt das Spurfehlersignal TE wieder sinusförmig an. Es wird die Zeit T zwischen dem ersten absichtlich zu gering dimensionierten Bremsimpuls B1 und einem vorgegebenen Punkt P des sinusförmigen Spurfehlersignals TE gemessen, der z.B noch vor dem Maximum MA dieser Spur liegen kann. Mit anderen Worten heißt dies, daß die Zeit gemessen wird, die vom ersten Bremsimpuls B1 an gerechnet vergeht, bis das Spurfehlersignal TE einen vorgebbaren Schwellwert erreicht. Zum Anhalten der optischen Abtastvorrichtung in der Mitte M2 der Spur wird nun ein zweiter Bremsimpuls B2 abgegeben, dessen Amplitude und/oder Dauer von der gemessenen Zeit T abhängen. Anschließend kann der Spurregelkreis wieder geschlossen werden. Frühestens bei Erreichen der nächsten Datenspur darf er, spätestens in der Spurmitte M2 muß er aber geschloßen werden.

Ist die gemessene Zeit T bei dem angeführten Ausführungsbeispiel kurz, so wird die Amplitude und/oder Dauer des zweiten Bremsimpulses B2 groß gewählt; ist dagegen die gemessene Zeit T groß, so fällt die Amplitude und/oder Dauer des zweiten Bremsimpulses B2 klein aus. Auf diese Weise wird schnell und sicher von einer Spur zur nächsten gesprungen.

Besonders vorteilhaft ist es, zur Optimierung des zweiten Bremsimpulses B2 sowohl seine Amplitude als auch seine Dauer zu verändern. Dies ist in der Figur beim Bremsimpuls B2 durch die gestrichelten Linien angedeutet.

Wenn über mehrere Spuren gesprungen werden soll, wird das Verfahren gemäß Anspruch 1 von Spur zu Spur wiederholt.

Obwohl beim erfindungsgemäßen Verfahren die optische Abtastvorrichtung bei jeder Spur erst angehalten und anschließend wieder beschleunigt wird, erhöht sich die Zugriffszeit auf eine gewünschte Spur verglichen mit der Vorrichtung aus der US-PS 4 495 608 kaum, weil beim erfindungsgemäßen Verfahren nachträgliche Korrekturen weitestgehend vermieden werden.

Die Erfindung ist für CD-Spieler, Video-Plattenspieler, DRAW-Disc-Spieler und magneto-optische Geräte geeignet.

## Patentansprüche

1. Verfahren zum Spurspringen bei einem Gerät zur Wiedergabe von Daten, die mittels einer optischen Abtastvorrichtung aus den Datenspuren eines Aufzeichnungsträgers lesbar sind, indem ein Lichtstrahl mittels eines Spurregelkreises auf den Datenspuren führbar ist, wobei beim Spurspringen von einer Datenspur zur nächsten die optische Abtastvorrichtung durch einen Sprungimpuls bewegt und durch mindestens einen Bremsimpuls angehalten wird, **gekennzeicnet** durch folgende Verfahrensschritte:

a) es wird ein Sprungimpuls (SI) abgegeben;

b) frühestens zu Beginn des Sprungimpulses (SI), spätestens jedoch beim Verlassen der Datenspur wird der Spurregelkreis geöffnet;

c) die optische Abtastvorrichtung wird durch einen ersten Bremsimpuls (B1) konstanter Dauer und Amplitude gebremst, der jedoch so klein dimensioniert ist, daß die Abtastvorrichtung nicht angehalten wird;

d) es wird die Zeit (T) bis zum Erreichen einer vorgebbaren Spurlage (P) bezüglich der nächsten Datenspur gemessen;

e) es wird ein zweiter Bremsimpuls (B2) abgegeben, dessen Dauer und/oder Amplitude von der gemessenen Zeit (T) abhängt, um die Abtastvorrichtung in der Mitte (M2) der nächsten Datenspur anzuhalten;

f) der Spurregelkreis wird frühestens zu Beginn des zweiten Bremsimpulses (B2), spätestens jedoch in der Mitte (M2) der nächsten Datenspur geschlossen.

**2.** Verfahren nach Anspruch 1, **dadurch gekennzeichnet,** daß beim Spurspringen über mehrere Datenspuren das Verfahren gemäß Anspruch 1 von Datenspur zu Datenspur wiederholt wird.

## Claims

**1.** Method for jumping tracks in an apparatus for the reproduction of data which is readable from the date tracks of a record carrier by means of an optical scanning device in that a light beam is guidable onto the data tracks by means of a tracking control loop, wherein for jumping tracks from one data track to the next, the optical scanning device is moved by a jump pulse and stopped by at least one braking pulse, characterized by the following method steps:

a) a jump pulse (SI) is emitted;

b) the control loop is opened at the earliest at the start of the jump pulse (SI), but at the latest on leaving the data track;

c) the optical scanning device is braked by a first braking pulse (B1) of constant amplitude and duration but which is dimensioned sufficiently small that the optical scanning devioe is not stopped;

d) the time (T) to reach a prefined track position (P) relative to the next data track is measured;

e) a second braking pulse (B2) is emitted, whose duration and/or amplitude is dependent on the measured time (T) in order to stop the scanning device in the middle (M2) of the next data track;

f) the tracking control loop is closed at the earliest at the start of the second braking pulse (B2) but at the latest in the middle (M2) of the next data track.

**2.** Method according to claim 1, characterised in that, for jumping tracks over several data tracks, the method in accordance with claim 1 is repeated from data track to data track.

## Revendications

**1.** Procédé pour sauter des pistes pour un appareil pour la reproduction de données qui peuvent être lues au moyen d'un dispositif de balayage optique à partir des pistes de données d'un support d'enregistrement, un faisceau lumineux pouvant être guidé sur les pistes de données au moyen d'un circuit de réglage de piste, le dispositif de balayage optique se déplaçant lors du saut de pistes d'une piste de données à la prochaine, par une impulsion de saut et s'y arrêtant par au moins une impulsion de freinage, **caractérisé** par les étapes de procédé suivantes :

a) Une impulsion de saut (SI) est donnée.

b) Le circuit de réglage de piste s'ouvre au plus tôt au début de l'impulsion de saut (SI), au plus tard cependant lorsque la piste de données est quittée.

c) Le dispositif de balayage optique est freiné par une première impulsion de freinage (B1) de durée et d'amplitude constante qui est cependant dimensionnée en étant si petite que le dispositif de balayage ne s'arrête pas.

d) Le temps (T), qui s'écoule jusqu'à ce qu'une position de piste (P), qui peut être prédéterminée, par rapport à la piste de données suivantes soit atteinte, est mesuré.

e) Une seconde impulsion de freinage (B2) est donnée dont la durée et/ou l'amplitude dépend du temps mesuré (T) pour arrêter le dispositif de balayage au milieu (M2) de la piste de données suivante.

f) Le circuit de réglage de piste se ferme au plus tôt au début de la seconde impulsion de freinage (B2), au plus tard cependant au milieu (M2) de la prochaine piste de données.

**2.** Procédé selon la revendication, **caractérisé en ce que,** lors du saut au-dessus de plusieurs pistes de données, le procédé selon la revendication 1 est répété de piste de données en piste de données.

*Figur*